# EUROPEAN PATENT SPECIFICATION

(11) **EP 3 904 028 B1**
(45) Date of publication and mention of the grant of the patent: **29.04.2026**
(21) Application number: 21169492.2
(22) Date of filing: 20.04.2021
(51) Int. Cl.: B23Q 1/01, B23Q 1/62, B23Q 3/155, B27C 5/06

(54) **WORKING CENTRE FOR WOODEN WORKPIECES COMPRISING TWO WORKING GROUPS**
ARBEITSZENTRUM FÜR HOLZWERKSTÜCKE BESTEHEND AUS ZWEI ARBEITSGRUPPEN
CENTRALE D'USINAGE POUR PIECES DE BOIS COMPRENANT DEUX GROUPES DE TRAVAIL

(30) Priority: 23.04.2020 IT 202000008743
(43) Date of publication of application: 03.11.2021
(73) Proprietor: SCM Group S.p.A., 47921 Rimini (RN) (IT)
(72) Inventor: GIGLIOTTI, Fabrizio, 47921 RIMINI (IT); TIEZZI, Livio, 47921 RIMINI (IT); TIEZZI, Giovanni, 47921 RIMINI (IT)
(74) Representative: Tiburzi, Andrea

(56) References cited:
- EP-A1- 1 810 803
- EP-A1- 3 501 729
- EP-A2- 2 165 811
- WO-A1-2019/207003
- CN-A- 106 994 615
- DE-A1- 102004 028 172
- DE-A1- 102007 022 200
- DE-A1- 19 521 846

## Description

The present invention relates to a working centre for wooden workpieces, as per the preamble of independent claim 1. Such a working centre is known from the document DE 10 2007 022200 A1.

More in detail, the invention relates to a working centre of the aforementioned type, designed and realized in particular to allow two working heads to access the same tools magazine, in particular, a working centre for workpieces to be machined such as longitudinal wooden, plastic, metal, ceramic, glass, fiberglass beams and the like, but which can concern any working centre equipped with two working heads.

In the following the description will be addressed to a working centre comprising two working heads for oblong pieces, but it is clear that the same should not be considered limited to this specific use.

As is well known, there are currently working centres specifically designed for machining oblong pieces such as beams, in particular wooden beams, intended for the construction of ceilings or roofs, for example.

These workpieces have a mainly longitudinal extension and are usually quite heavy.

Known working centres generally comprise a work surface for loading the pieces to be machined, a fixed crosspiece, to which one or more working units are coupled, and a work surface, for unloading the worked workpiece, generally both the loading surface and the unloading surface have a surface made up, among other things, of rollers, along which the workpiece is transported.

Usually, during the machining of the workpieces, it may be necessary for the machining heads to change the tools, to perform different machining on the workpiece.

To this end, known working centres are usually provided with two working heads and a single tool rack that serves only one working head, therefore for the second head it is not possible to change the tool automatically but only manually by an operator.

Alternatively, working centres are known comprising two working heads and two tool racks, each one however associated with a respective working head.

In these known centres, it is evident that the dimensions of the working centre are large since it is necessary to provide two separate magazines, each side by side with the relative working head.

The relevant prior art also includes the patent applications DE 102007022200 A1, EP1810803 A1, CN 106994615 A, EP 2165811 A2, WO 2019/207003 A1 and DE 102004028172 A1.

In light of the above, it is, therefore, an object of the present invention to provide a working centre comprising two working heads, each one of which can perform the tool change in its own housing or tool rack, to reduce the tooling times, i.e., tool change of the two working heads.

A further object of the present invention is to provide a working centre comprising two working heads and a single tool rack for both working heads, in order to considerably reduce the overall encumbrance of the working centre.

It is further object of the present invention to provide a working centre comprising two working heads and a single tool rack for both working heads, in which it is possible to mask the tool change time of a head during the machining of the workpiece by of the other head.

It is therefore specific object of the present invention a working centre, for working a workpiece, like a beam, made of wood, plastic, metal, ceramic, glass and fiberglass, comprising a supporting plane, extending in a first direction, for supporting said workpiece, comprising a first half plane and a second half plane, movement members of said workpiece along said first direction, a working unit, arranged between said first and second half plane, comprising a first and a second working group for working said workpiece, which comprise, respectively, a first working head, movable along a second direction, orthogonal to said first direction and a third direction, orthogonal to the plane passing through two straight lines parallel to said first and second direction, and rotating with respect to a first rotation axis and a second rotation axis, and a second working head, movable along said second direction and third direction and rotating around a third rotation axis and a fourth rotation axis, and a logic control unit for controlling said working centre, capable of operating said first and second working group, said working centre being characterized in that it comprises at least one first housing configured for housing at least one tool for working said workpiece and for carrying out a tool change with said first working head, and at least one second housing configured for housing at least one tool for working said workpiece, and for carrying out a tool change with said second working head.

Further according to the invention, said working centre may comprise a tool rack which in turn comprises said at least one first housing and said at least one second housing.

Still according to the invention, said at least one first housing may coincide spatially with said at least one second housing.

Preferably according to the invention, said first working head may be capable of carrying out, as the last linear movement, a translation, according to said third direction, and said second working head may be capable of carrying out, as the last linear movement, a translation, according to said second direction.

Always according to the invention, said working unit may comprise a crosspiece extending longitudinally along said second direction and provided with a guides system on which said first working group moves, an upright extending vertically along said third direction and provided with a guides system, on which said second working group moves.

Further according to the invention, said tool rack may be of rotary type.

Still according to the invention, said tool rack may comprise at least one fixed support, fixed to said working centre and provided with a guides system, at least one sliding support, slidingly coupled, along said first direction, to said at least one fixed support by said at least one guides system, and a tool holder plate, integral with said at least one sliding support, and capable of moving away and approaching with respect to said working unit, according to said first direction.

Preferably according to the invention, said tool holder plate may have a circular shape and is capable of rotating on itself around an axis orthogonal to said supporting plane.

Always according to the invention, said tool rack may comprise a first fixed support, provided with a guides system, and a second fixed support, provided with a guides system, a first sliding support, slidingly coupled, along said first direction, to said first fixed support, and a second sliding support, slidingly coupled, along said first direction, to said second fixed support, said first fixed support may be fixed to said working centre, on one side of said supporting plane and said second fixed support is fixed to said working centre, on the opposite side of said supporting plane, and said tool holder plate may be integral to said first and second sliding support, so as to overcome said supporting plane.

Further according to the invention, said tool holder plate may have an elongated shape which develops along a second direction, orthogonal to said first direction.

Still according to the invention, said tool holder plate may comprise a first end integral with said first sliding support and a second end integral with said second sliding support.

Preferably according to the invention, said tool holder plate may have an edge defined by two straight portions, parallel to each other, extending along a second direction, orthogonal to said first direction, and two curved portions closing on said straight portions, and a tool holder chain may be coupled to said edge, said tool holder chain being capable of rotating on itself around an axis orthogonal to said supporting plane.

The present invention will be now described, for illustrative but not limitative purposes, according to its preferred embodiments, with particular reference to the figures of the enclosed drawings, wherein:
figure 1 shows a side perspective view of the working centre for wooden workpieces, provided with a single tool rack, object of the present invention, in which the working groups are in a determined position;
figure 2 shows a side perspective view of the working centre shown in figure 1, in which the working groups are in another position;
figure 3 shows a side perspective view of the working centre shown in figure 1, in which the working groups are in another position;
figure 4 shows a side perspective view of the working centre shown in figure 1, in which a second embodiment of the tool rack is shown;
figure 5 shows a side perspective view of the working centre with the second embodiment of the tool rack shown in figure 4, in which the working groups are in a given position; and
figure 6 shows a side perspective view of the working centre with the second embodiment of the tool rack shown in figure 4, in which the working groups are in another position.

In the various figures, similar parts will be indicated by the same reference numbers.

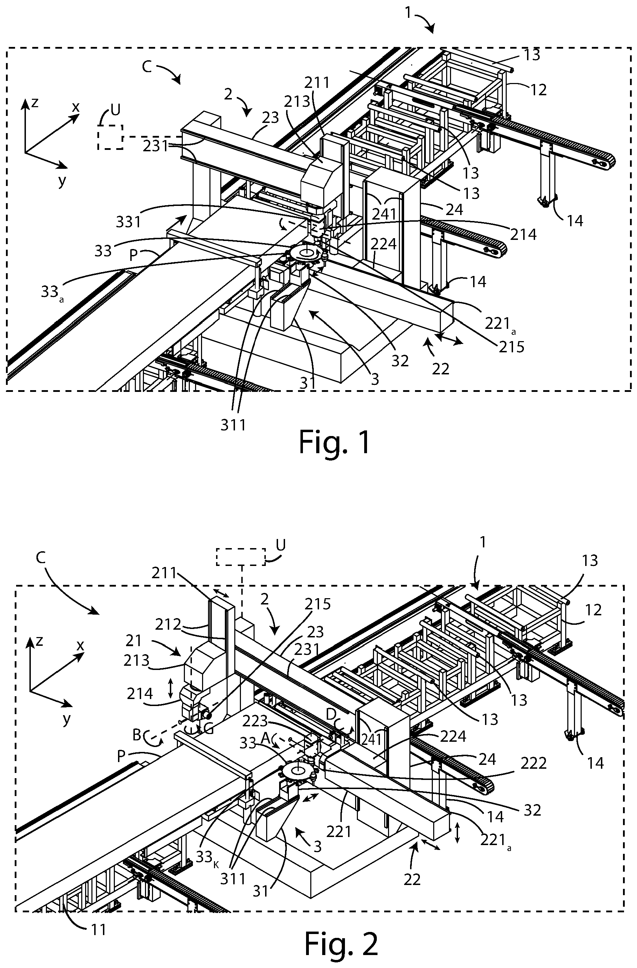

With reference to figures 1-3, the working centre C for wooden workpieces comprising two working groups and a tool magazine, object of the present invention, essentially comprises a supporting plane 1, for supporting and transporting the workpiece P, along which said workpiece P is made to slide by means of movement members, not shown in the figure, such as for example grippers or rollers or chains, a working unit 2, comprising a first working group 21, and a second working group 22, to carry out the workings to be made to said workpiece P, a tool rack 3, which contains the tools necessary for machining said workpiece P, and a logic control unit U, which manages the operation of said working centre C and therefore the machining of the workpiece P.

The workpiece P typically has a prevalently longitudinal extension, which extends along a first direction X, along which the sliding of said workpiece P also takes place in said working centre C, by means of said movement members, and can generally be a beam, having a parallelepiped geometric shape.

Said supporting plane 1 comprises a first half-plane 11 and a second half-plane 12. Between said first 11 and second 12 half-plane said working unit 2 is interposed.

Rollers 13 are provided on said first 11 and second 12 half-planes, to facilitate the movement and the sliding of the workpiece P along the supporting surface 1.

Generally, on said first half-plane 11 the workpiece P to be worked is loaded, and on said second half-plane 12 the transport and subsequent unloading of the workpiece P takes place.

Furthermore, said first 11 and second 12 half-planes also comprise supports 14 for anchoring to the ground.

The machining unit 2, as mentioned, is arranged according to the invention, between said first 11 and said second 12 half-plane, between which there is, therefore, an interruption that allows machining of the lower face of the workpiece P resting on said supporting surface 1, as will also be described in detail below.

Said working unit 2 comprises a first working group 21, and a second working group 22.

Said processing unit also comprises a crosspiece 23, which extends longitudinally along a second direction Y, orthogonal to said first direction X, and provided with a guide system 231.

Said processing unit also comprises an upright 24, which extends vertically according to a third direction Z, and provided with a system of guides 241, said third direction Z being orthogonal with respect to a plane passing through two lines parallel to said first X and second Y direction.

Said first machining unit 21 comprises a slide 211, provided with a guide system 212, a sliding support 213, a first working head 214, and one or more tools, in particular a tool 215.

Said first working head 214 is a four-axis head since it is able to move along said second direction Y and third direction Z, and rotate around a first rotation axis C and a second rotation axis B.

However, said first working head 214 can also have five axes, six axes, or more axes.

In particular, said slide 211 extends vertically along said third direction Z and it is slidingly coupled to said crosspiece 23 by means of said guide system 231, so as to slide along said crosspiece 23 from a start stroke position to an end stroke position, and vice versa, according to said second direction Y.

Said sliding support 213 is coupled to said slide 211 by means of said guide system 212, so as to slide from a lowered position to a raised position with respect to said supporting plane 1, along said third direction Z.

Said first working head 214 is rotatably coupled to said sliding support 213, and moves integrally with said sliding support 213, so as to perform the movements necessary to perform the workings on said workpiece P, mainly on its upper face.

Said first working head 214 has as its last linear movement in the kinematic chain a translation along said third direction Z.

Said tool 215 is coupled to said first working head 214.

Similarly, said second working group 22 comprises a sliding support 221, a second working head 222, and one or more tools, in particular a tool 223.

Said second working head 222 is a four-axis head since it is able to move along said second direction Y and third direction Z, and rotate around a third rotation axis A and a fourth rotation axis D.

However, said second working head 222 can also have five axes, six axes, or more axes.

As previously described, said second working head 222 is capable of machining the lower face of the workpiece P, which rests on said supporting surface 1 thanks to the interruption between said first 11 and second 12 half-planes.

As is evident, said working centre C is capable of accessing and machining all the faces of the workpiece P, even simultaneously.

In fact, the last movement of the kinematic chain of said second working head 222 is along said second direction Y, which allows the machining of the workpiece P from below, while the last movement of the kinematic chain of said first working head 214 is along said third direction Z, which allows machining of the workpiece P from above and laterally, even at the same time as machining from below.

Therefore, in this way all the faces of the workpiece P are easily accessible and machinable by said first 214 and second 222 working head.

In particular, said sliding support 221 is provided with a guide system 221a and it is slidingly coupled, along said second direction Y, to a slide 224.

Said slide 224 is in turn slidingly coupled to said upright 24 by means of said guide system 241, so as to slide on said upright 24, according to said third direction Z, from a start stroke position to an end stroke position, and vice versa.

Said working head 222 is rotatably coupled to said sliding support 221, and moves integrally with said sliding support 221, so as to perform the movements necessary to perform the machining on said workpiece P, mainly on its lower face, but also on the upper one.

Said tool 223 is coupled to said working head 222 and is capable of rotating around a third rotation axis A and around a fourth rotation axis D.

In a first embodiment of said tool holder 3, this comprises a fixed support 31, provided with a guide system 311, a sliding support 32, and a rotary type tool holder plate 33, having a circular shape.

Said fixed support 31 is fixed with a first end to said working centre C, while said guide system 311 is arranged on a second end, opposite to the first.

Said sliding support 32 is coupled to said fixed support 31 by means of said guide system 311, so that said sliding support 32 can translate, along said first direction X, from a start stroke position, in which it is retracted away from said crosspiece 23, towards an end of stroke position, in which it is approaching towards said crosspiece 23, and vice versa.

Said tool holder plate 33 is integral with said sliding support 32, so as to follow the same movements, and in such a way that said tool holder plate 33 can be arranged facing, or in proximity to, said first 214 and second 222 working head.

Said tool holder plate 33 is provided with a plurality of housings 33ₐ, 33_{b},... 33ₖ,..., 33ₙ, in which the tools necessary for machining the workpiece P are housed, which are automatically mounted on said first 214 and second 222 working head, during the processing of the workpiece P.

Said tool holder plate 33 is able to rotate on itself around an axis parallel to said third direction Z, i.e. about an axis orthogonal to said supporting plane 2.

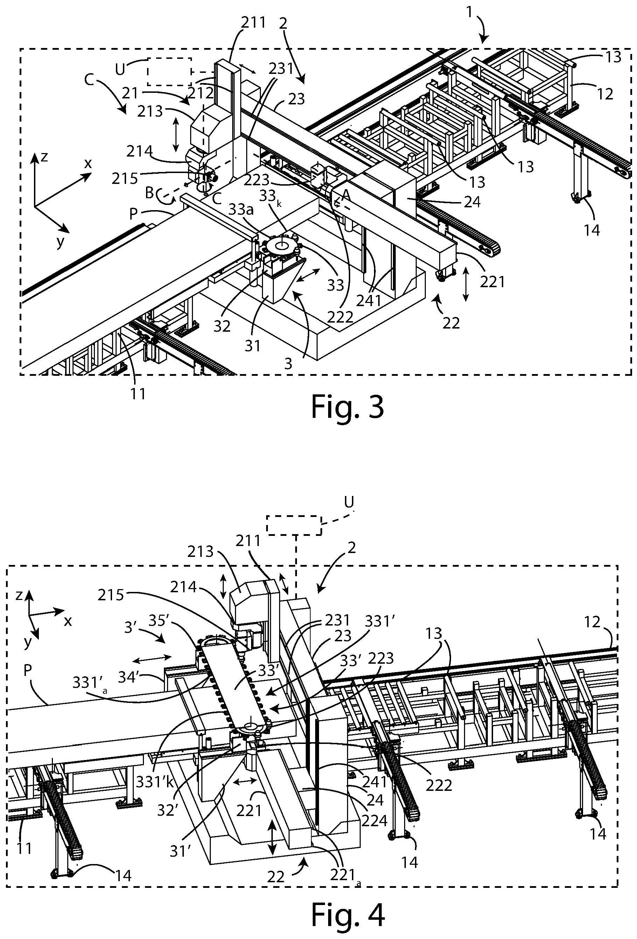

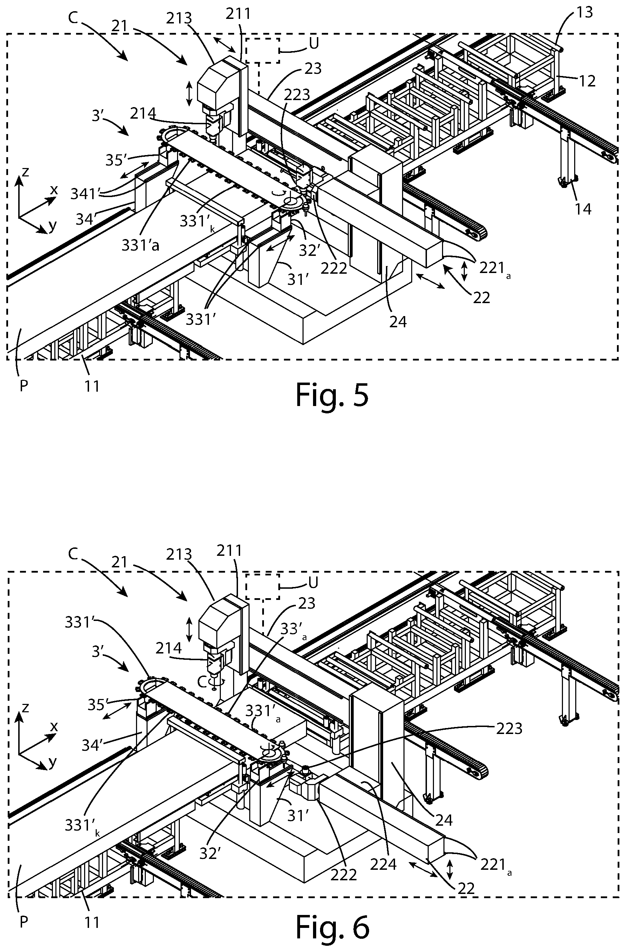

Referring now to figures 4-6, in a second embodiment of said tool rack 3', this has a bridge structure, which is above said supporting plane 1.

In particular, said tool holder 3' comprises a first fixed support 31', provided with a first guide system 311', a first sliding support 32', and a rotary type tool holder plate 33'.

Said first fixed support 31 ' is fixed by a first end to said working centre C, at one side of said supporting plane 1, while said first guide system 311' is arranged on a second end, opposite to the first one.

Said first sliding support 32' is coupled to said first fixed support 31' by means of said first guides system 311', so that said first sliding support 32' can translate, along said first direction X, from a start stroke position, in which it is retracted away from said crosspiece 23, towards an end of stroke position, in which it is approaching towards said crosspiece 23.

Said tool rack 3' similarly comprises a second fixed support 34', provided with a second guide system 341', a second sliding support 35', and the same tool holder plate 33'.

Said second fixed support 34' is fixed with a first end to said working centre C, in correspondence with the side of said supporting plane 1, opposite to the fixing side of said first fixed support 31', while on a second end, opposite to the first one, said second guide system 341' is arranged.

Said second sliding support 35' is coupled to said second fixed support 34' by means of said second guide system 341', so that said second sliding support 35' can translate, along said first direction X, from a start stroke position, in which it is retracted away from said crosspiece 23, towards an end of stroke position, in which it is approaching towards said crosspiece 23.

Said tool holder plate 33' is integral with said first sliding support 32' and second sliding support 35', so as to follow the same movements, and so that said tool holder plate 33' can be arranged facing, or close to, said first 214 and second 222 working head.

Said tool holder plate 33' has an elongated shape, which extends along said second direction Y.

Furthermore, said tool holder plate 33', as previously mentioned, surmounts said supporting plane 1 since it has an end integral with said first sliding support 32' and a second end integral with said second sliding support 35'.

In particular, said tool holder plate 33' has an edge delimited by two rectilinear and parallel portions, which extend along said second direction Y, and two curved portions, which are close on said rectilinear portions.

A tool holder chain 331' is coupled to said edge that rotates about itself about an axis parallel to said third direction Z, i.e., about an axis perpendicular to said support plane 1.

Said tool holder chain 331' is provided with a plurality of housings 331'ₐ, 331'_{b}, ... 331'ₖ, ..., 331'ₙ, in which the tools necessary for machining the workpiece P are housed, which are mounted automatically on said first 214 and second 222 working head, during the machining of the workpiece P.

Without departing from the scope of protection of the present invention, for both said first 3 and second 3' embodiments of said tool rack, it is possible that said respective plurality of housings 33ₐ, 33_{b},... 33ₖ,..., 33ₙ and 331'ₐ, 331'_{b}, ... 331'ₖ, ..., 331'ₙ are arranged on separate supports, i.e., in two distinct tool racks, so that each one of said first 214 and second 222 working head can access its own tool rack.

The operation of the working centre C described above is as follows.

When a workpiece P is arranged on said first half-plane 11, said logic control unit U starts and manages the operation of said machining unit 2.

In particular, said first 214 and second 222 working heads are provided with respective tools 215 and 223 to perform the machining on the workpiece P.

While a working head performs the machining, the remaining working head can perform the tool change, approaching said tool rack and vice versa.

Only by way of example, to better clarify the operation of the working centre C, it is assumed that said first working head 214 is performing a machining on said workpiece P, carrying out the appropriate movements along said crosspiece 23 and along said slide 211.

In the meantime, said second working head 222 can perform a tool change by approaching said tool holder plate 33, in correspondence with a subset of the tool holder housings 33ₐ, 33_{b},... 33ₖ,..., 33ₙ, translating along said upright 24.

Once the machining by said first working head 214 has finished, it is possible that said logic control unit U manages the actuation of said second working head 222, while said first working head 214 can perform the tool change.

Therefore, while said second working head 222 performs the machining on said workpiece P, said first working head 214 approaches said tool holder plate 33, in correspondence with at least the same subset of tool holders housings 33ₐ, 33_{b},... 33ₖ,..., 33ₙ, to which said second working head 222 had had access, to perform the tool change.

Therefore, said first 214 and second 222 working head can access the same subset of housings 33ₐ, 33_{b},... 33ₖ,..., 33ₙ, with which said tool rack 3 is provided.

Furthermore, said first working head 214 can access further housings 33ₐ, 33_{b},... 33ₖ,..., 33ₙ of said tool rack 3 different from those to which said second working head 222 has access and vice versa.

It is evident that the combinations of machining and tool changing steps by said first 214 and second 222 working head can be different and dissimilar from those described here by way of example.

In fact, it is also possible that said first 214 and second 222 working head simultaneously work the workpiece P and/or simultaneously perform the tool change.

The operation of said working centre C remains unchanged also for the second embodiment described for said tool rack 3'.

As is evident from the above description, the working centre C comprising two machining heads and a tool rack, object of the present invention, allows speeding up the machining times of a workpiece P to be machined as it allows masking the tool change times of one working head, while the other working head is performing a part of the machining of the workpiece P.

Furthermore, as is evident from the above description, said working centre C has a limited overall dimension since it comprises a single tool holder magazine for two machining heads.

## Claims

1. Working centre (C), for working a workpiece (P), like a beam, made of wood, plastic, metal, ceramic, glass and fiberglass, comprising
a supporting plane (1), extending in a first direction (X), for supporting said workpiece (P), comprising a first halfplane (11) and a second half plane (12),
movement members of said workpiece (P) along said first direction (X),
a working unit (2), arranged between said first (11) and second (12) half-plane, **characterized in that** at an interruption between them, that allows machining of a lower face of said workpiece (P) resting on said supporting plane (1), said working unit (2) comprising a first (21) and a second (22) working group for working said workpiece (P), which comprise, respectively, a first working head (214), movable along a second direction (Y), orthogonal to said first direction (X) and a third direction (Z), orthogonal to the plane passing through two straight lines parallel to said first (X) and second direction (Y), and rotating with respect to a first rotation axis (C) and a second rotation axis (B), and a second working head (222), movable along said second direction (Y) and third direction (Z) and rotating around a third rotation axis (A) and a fourth rotation axis (D),
a logic control unit (U) for controlling said working centre (C), capable of operating said first (21) and second (22) working group,
at least one first housing (33ₖ, 331'ₖ) configured for housing at least one tool for working said workpiece (P) and for carrying out a tool change with said first working head (214), and
at least one second housing (33ₙ, 331'ₙ) configured for housing at least one tool for working said workpiece (P), and for carrying out a tool change with said second working head (222), said working centre (C) comprising a tool rack (3, 3') which in turn comprises said at least one first housing (33ₖ, 331'ₖ) and said at least one second housing (33ₙ, 331'ₙ), wherein said tool rack (3, 3') is a single tool rack for both working heads.

2. Working centre (C) according to the preceding claim, **characterized**
**in that** said first working head (214) is capable of carrying out, as the last linear movement, a translation, according to said third direction (Z), and
**in that** said second working head (222) is capable of carrying out, as the last linear movement, a translation, according to said second direction (Y).

3. Working centre (C) according to any one of the preceding claims, **characterized**
**in that** said working unit (2) comprises
a crosspiece (23) extending longitudinally along said second direction (Y) and provided with a guides system (231) on which said first working group moves (21),
an upright (24) extending vertically along said third direction (Z) and provided with a guides system (241), on which said second working group moves (22).

4. Working centre (C) according to any one of the preceding claims, **characterized in that** said tool rack (3, 3') is of rotary type.

5. Working centre (C) according to any one of the preceding claims, **characterized in that** said tool rack (3, 3') comprises
at least one fixed support (31, 31', 34'), fixed to said working centre (C) and provided with a guides system (311, 311', 341'),
at least one sliding support (32, 32', 35'), slidingly coupled, along said first direction (X), to said at least one fixed support (31, 31', 34') by said at least one guides system (311, 311', 341'), and
a tool holder plate (33, 33'), integral with said at least one sliding support (32, 32', 35'), and capable of moving away and approaching with respect to said working unit (2), according to said first direction (X).

6. Working centre (C) according to the preceding claim, **characterized in that** said tool holder plate (33) has a circular shape and is capable of rotating on itself around an axis orthogonal to said supporting plane (2).

7. Working centre (C) according to the preceding claim, **characterized in that** said at least one first housing (33ₖ, 331'ₖ) coincides spatially with said at least one second housing (33ₙ, 331'ₙ).

8. Working centre (C) according to claim 5, **characterized**
**in that** said tool rack (3') comprises
a first fixed support (31'), provided with a guides system (311'), and a second fixed support (34'), provided with a guides system (341'),
a first sliding support (32'), slidingly coupled, along said first direction (X), to said first fixed support (31'), and a second sliding support (35'), slidingly coupled, along said first direction (X), to said second fixed support (34'),
**in that** said first fixed support (31') is fixed to said working centre (C), on one side of said supporting plane (1) and said second fixed support (34') is fixed to said working centre (C), on the opposite side of said supporting plane (1), and
**in that** said tool holder plate (33') is integral to said first (32') and second (35') sliding support, so as to overcome said supporting plane (1).

9. Working centre (C) according to the preceding claim, **characterized in that** said tool holder plate (33') has an elongated shape which develops along a second direction (Y), orthogonal to said first direction (X).

10. Working centre (C) according to any one of claims 8 and/or 9, **characterized in that** said tool holder plate (33'), comprises a first end integral with said first sliding support (32') and a second end integral with said second sliding support (35').

11. Working centre (C) according to any one of claims 8-10, **characterized**
**in that** said tool holder plate (33') has an edge defined by two straight portions, parallel to each other, extending along a second direction (Y), orthogonal to said first direction (X), and two curved portions closing on said straight portions, and
**in that** a tool holder chain (331') is coupled to said edge, said tool holder chain (331') being capable of rotating on itself around an axis orthogonal to said supporting plane (1).

## Patentansprüche

1. Arbeitszentrum (C) zum Bearbeiten eines Werkstücks (P), beispielsweise eines Balkens, aus Holz, Kunststoff, Metall, Keramik, Glas und Glasfaser, mit einer
in einer ersten Richtung (X) verlaufenden Auflagefläche (1) zum Auflegen des Werkstücks (P), die eine erste Halbebene (11) und eine zweite Halbebene (12) umfasst,
Bewegungselemente des Werkstücks (P) entlang der ersten Richtung (X),
eine Arbeitseinheit (2), die zwischen der ersten (11) und zweite (12) Halbebene, **dadurch gekennzeichnet, dass** sie an einer Unterbrechung zwischen ihnen die Bearbeitung einer Unterseite des auf der Stützebene (1) ruhenden Werkstücks (P) ermöglicht, wobei die Arbeitseinheit (2) eine erste (21) und eine zweite (22) Arbeitsgruppe zur Bearbeitung des Werkstücks (P) umfasst, die jeweils einen ersten Arbeitskopf (214) umfassen, der entlang einer zweiten Richtung (Y) beweglich ist, Richtung (X) und einer dritten Richtung (Z) beweglich ist, die orthogonal zu der Ebene ist, die durch zwei gerade Linien parallel zu der ersten (X) und der zweiten Richtung (Y) verläuft, und sich in Bezug auf eine erste Drehachse (C) und eine zweite Drehachse (B) dreht, und einen zweiten Arbeitskopf (222), der entlang der zweiten Richtung (Y) und der dritten Richtung (Z) beweglich ist und die sich um eine dritte Drehachse (A) und eine vierte Drehachse (D) dreht,
eine logische Steuereinheit (U) zur Steuerung des Arbeitszentrum s (C), die in der Lage ist, die erste (21) und die zweite (22) Arbeitsgruppe zu betreiben,
mindestens ein erstes Gehäuse (33ₖ, 331'ₖ), das zur Aufnahme mindestens eines Werkzeugs zur Bearbeitung des Werkstücks (P) und zur Durchführung eines Werkzeugwechsels mit dem ersten Arbeitskopf (214) konfiguriert ist, und
mindestens ein zweites Gehäuse (33ₙ, 331'ₙ), das zur Aufnahme mindestens eines Werkzeugs zur Bearbeitung des Werkstücks (P) und zur Durchführung eines Werkzeugwechsels mit dem zweiten Arbeitskopf (222) konfiguriert ist, wobei das Arbeitszentrum (C) ein Werkzeuggestell (3, 3') umfasst, das seinerseits das mindestens eine erste Gehäuse (33ₖ, 331'ₖ) und das mindestens eine zweite Gehäuse (33ₙ, 331'ₙ) umfasst, wobei das Werkzeuggestell (3, 3') ein einziges Werkzeuggestell für beide Arbeitsköpfe ist.

2. Arbeitszentrum (C) nach dem vorhergehenden Anspruch, **dadurch gekennzeichnet,**
**dass** der erste Arbeitskopf (214) in der Lage ist, als letzte lineare Bewegung eine Verschiebung in der dritten Richtung (Z) auszuführen, und
**dass** der zweite Arbeitskopf (222) in der Lage ist, als letzte lineare Bewegung eine Verschiebung in der zweiten Richtung (Y) auszuführen.

3. Arbeitszentrum (C) nach einem der vorhergehenden Ansprüche, **dadurch gekennzeichnet,**
**dass** die Arbeitseinheit (2) einen
Querträger (23) umfasst, der sich in Längsrichtung entlang der zweiten Richtung (Y) erstreckt und mit einem Führungssystem (231) versehen ist, auf dem sich die erste Arbeitsgruppe (21) bewegt,
einen Ständer (24), der sich vertikal entlang der dritten Richtung (Z) erstreckt und mit einem Führungssystem (241) versehen ist, auf dem sich die zweite Arbeitsgruppe (22) bewegt.

4. Arbeitszentrum (C) nach einem der vorhergehenden Ansprüche, **dadurch gekennzeichnet, dass** das Werkzeuggestell (3, 3') drehbar ist.

5. Arbeitszentrum (C) nach einem der vorstehenden Ansprüche, **dadurch gekennzeichnet, dass** das Werkzeugregal (3, 3') umfasst
mindestens einen festen Träger (31, 31', 34'), der an dem Arbeitszentrum (C) befestigt und mit einem Führungssystem (311, 311', 341') versehen ist, mindestens einen gleitenden Träger (32, 32', 35'), der entlang der ersten Richtung (X) mit dem mindestens einen festen Träger (31, 31', 34') durch das mindestens eine Führungssystem (311, 311', 341') gleitend verbunden ist, und
eine Werkzeughalterplatte (33, 33'), die fest mit dem mindestens einen Gleitträger (32, 32', 35') verbunden ist und sich in Bezug auf die Arbeitseinheit (2) gemäß der ersten Richtung (X) entfernen und annähern kann.

6. Arbeitszentrum (C) nach dem vorhergehenden Anspruch, **dadurch gekennzeichnet, dass** die Werkzeughalterplatte (33) eine kreisförmige Form hat und um sich selbst um eine Achse orthogonal zur Auflageebene (2) drehen kann.

7. Arbeitszentrum (C) nach dem vorhergehenden Anspruch, **dadurch gekennzeichnet, dass** das mindestens eine erste Gehäuse (33ₖ, 331'ₖ) räumlich mit dem mindestens einen zweiten Gehäuse (33ₙ, 331'ₙ) zusammenfällt.

8. Arbeitszentrum (C) nach Anspruch 5, **dadurch gekennzeichnet,**
**dass** das Werkzeugregal (3') umfasst
einen ersten festen Träger (31'), der mit einem Führungssystem (311') versehen ist, und einen zweiten festen Träger (34'), der mit einem Führungssystem (341') versehen ist,
eine erste Gleitstütze (32'), die entlang der ersten Richtung (X) gleitend mit der ersten festen Stütze (31') gekoppelt ist, und eine zweite Gleitstütze (35'), die entlang der ersten Richtung (X) gleitend mit der zweiten festen Stütze (34') gekoppelt ist,
wobei die erste feste Stütze (31') auf einer Seite der Stützebene (1) an dem Arbeitsmittelpunkt (C) befestigt ist und die zweite feste Stütze (34') auf der gegenüberliegenden Seite der Stützebene (1) an dem Arbeitsmittelpunkt (C) befestigt ist, und
**dass** die Werkzeughalterplatte (33') fest mit dem ersten (32') und dem zweiten (35') Gleitträger verbunden ist, so dass sie die Stützebene (1) überwindet.

9. Arbeitszentrum (C) nach dem vorhergehenden Anspruch, **dadurch gekennzeichnet, dass** die Werkzeughalterplatte (33') eine längliche Form hat, die sich entlang einer zweiten Richtung (Y) entwickelt, die orthogonal zu der ersten Richtung (X) ist.

10. Arbeitszentrum (C) nach einem der Ansprüche 8 und/oder 9, **dadurch gekennzeichnet, dass** die Werkzeughalterplatte (33') ein erstes Ende aufweist, das mit dem ersten Gleitträger (32') verbunden ist, und ein zweites Ende, das mit dem zweiten Gleitträger (35') verbunden ist.

11. Arbeitszentrum (C) nach einem der Ansprüche 8-10, **dadurch gekennzeichnet, dass** die Werkzeughalterplatte (33') eine Kante aufweist, die durch zwei gerade Abschnitte, die parallel zueinander sind und sich entlang einer zweiten Richtung (Y), die orthogonal zu der ersten Richtung (X) ist, erstrecken, und zwei gekrümmte Abschnitte, die an den geraden Abschnitten abschließen, definiert ist, und
dass eine Werkzeughalterkette (331') mit der Kante gekoppelt ist, wobei die Werkzeughalterkette (331') in der Lage ist, sich um sich selbst um eine Achse orthogonal zu der Stützebene (1) zu drehen.

## Revendications

1. Centrale d'usinage (C) pour usiner une pièce (P), telle qu'une poutre, en bois, plastique, métal, céramique, verre et fibre de verre, comprenant un plan de support (1) s'étendant dans une première direction (X) pour supporter ladite pièce (P), comprenant un premier demi-plan (11) et un second demi-plan (12),
des éléments de déplacement de ladite pièce à usiner (P) le long de ladite première direction (X),
une unité de travail (2), disposée entre lesdits premier (11) et deuxième (12) demi-plan, **caractérisé en ce qu'**à une interruption entre eux, qui permet l'usinage d'une face inférieure de ladite pièce (P) reposant sur ledit plan de support (1), ladite unité de travail (2) comprenant un premier (21) et un deuxième (22) groupe de travail pour le travail de ladite pièce (P), qui comprennent respectivement une première tête de travail (214), mobile le long d'une deuxième direction (Y), orthogonale à ladite première direction (X) et une troisième direction (Z), orthogonale au plan passant par deux droites parallèles à ladite première (X) et deuxième direction (Y), et tournant par rapport à un premier axe de rotation (C) et un deuxième axe de rotation (B), et une deuxième tête de travail (222), mobile le long de ladite deuxième direction (Y) et troisième direction (Z) et tournant autour d'un troisième axe de rotation (A) et d'un quatrième axe de rotation (D), une unité de commande logique (U) pour contrôler ladite centrale d'usinage (C), capable de faire fonctionner ledit premier (21) et deuxième (22) groupe de travail,
au moins un premier logement (33ₖ, 331'ₖ) configuré pour loger au moins un outil pour travailler ladite pièce (P) et pour effectuer un changement d'outil avec ladite première tête de travail (214), et
au moins un deuxième logement (33ₙ, 331'ₙ) configuré pour loger au moins un outil pour travailler ladite pièce (P), et pour effectuer un changement d'outil avec ladite seconde tête de travail (222), ladite centrale d'usinage (C) comprenant un rack d'outils (3, 3') qui comprend à son tour ledit au moins un premier logement (33ₖ, 331'ₖ) et ledit au moins un deuxième logement (33ₙ, 331'ₙ), dans lequel ledit rack d'outils (3, 3') est un rack d'outils unique pour les deux têtes de travail.

2. Centrale d'usinage (C) selon la revendication précédente, **caractérisée**
**en ce que** ladite première tête de travail (214) est capable d'effectuer, comme dernier mouvement linéaire, une translation, selon ladite troisième direction (Z), et
**en ce que** ladite deuxième tête de travail (222) est capable d'effectuer, comme dernier mouvement linéaire, une translation, selon ladite deuxième direction (Y).

3. Centrale d'usinage (C) selon l'une quelconque des revendications précédentes, **caractérisée en ce que** ladite unité de travail (2) comprend une traverse (23) s'étendant longitudinalement selon ladite deuxième direction (Y) et pourvue d'un système de guidage (231) sur laquelle se déplace ledit premier groupe de travail (21),
un montant (24) s'étendant verticalement selon ladite troisième direction (Z) et pourvu d'un système de guidage (241), sur lequel se déplace ledit deuxième groupe de travail (22).

4. Centrale d'usinage (C) selon l'une quelconque des revendications précédentes, **caractérisée en ce que** ledit porte-outil (3, 3') est de type rotatif.

5. Centre d'usinage (C) selon l'une quelconque des revendications précédentes, **caractérisée en ce que** ledit porte-outil (3, 3') comprend
au moins un support fixe (31, 31', 34'), fixé à ladite centrale d'usinage (C) et pourvu d'un système de guidage (311, 311', 341'),
au moins un support coulissant (32, 32', 35'), couplé coulissant, le long de ladite première direction (X), audit au moins un support fixe (31, 31', 34') par ledit au moins un système de guidage (311, 311', 341'), et une plaque porte-outil (33, 33'), solidaire dudit au moins un support coulissant (32, 32', 35'), et capable de s'éloigner et de se rapprocher par rapport à ladite unité de travail (2), selon ladite première direction (X).

6. Centrale d'usinage (C) selon la revendication précédente, **caractérisée en ce que** ladite plaque porte-outil (33) a une forme circulaire et est capable de tourner sur elle-même autour d'un axe orthogonal audit plan de support (2).

7. Centrale d'usinage (C) selon la revendication précédente, **caractérisée en ce que** ledit au moins un premier logement (33ₖ, 331'ₖ) coïncide spatialement avec ledit au moins un deuxième logement (33ₙ, 331'ₙ).

8. Centre d'usinage (C) selon la revendication 5, **caractérisée**
**en ce que** ledit porte-outil (3') comprend un premier support fixe (31'), muni d'un système de guidage (311'), et un second support fixe (34'), muni d'un système de guidage (341'),
un premier support coulissant (32'), couplé de manière coulissante, le long de ladite première direction (X), audit premier support fixe (31'), et un second support coulissant (35'), couplé de manière coulissante, le long de ladite première direction (X), audit second support fixe (34'),
en ce sens que ledit premier support fixe (31') est fixé à ladite centrale d'usinage (C), sur un côté dudit plan de support (1) et que ledit second support fixe (34') est fixé à ladite centrale d'usinage (C), sur le côté opposé dudit plan de support (1), et
**en ce que** ladite plaque porte-outil (33') est solidaire desdits premier (32') et second (35') supports coulissants, de manière à surmonter ledit plan d'appui (1).

9. Centrale d'usinage (C) selon la revendication précédente, **caractérisée en ce que** ladite plaque porte-outil (33') a une forme allongée qui se développe selon une deuxième direction (Y), orthogonale à ladite première direction (X).

10. Centrale d'usinage (C) selon l'une quelconque des revendications 8 et/ou 9, **caractérisée en ce que** ladite plaque porte-outil (33') comprend une première extrémité solidaire dudit premier support coulissant (32') et une seconde extrémité solidaire dudit second support coulissant (35').

11. Centrale d'usinage (C) selon l'une quelconque des revendications 8-10, **caractérisée**
**en ce que** ladite plaque porte-outil (33') présente un bord défini par deux parties droites, parallèles l'une à l'autre, s'étendant le long d'une seconde direction (Y), orthogonale à ladite première direction (X), et
deux parties courbes se refermant sur lesdites parties droites, et en ce qu'une chaîne porte-outil (331') est couplée audit bord, ladite chaîne porte-outil (331') étant capable de tourner sur elle-même autour d'un axe orthogonal audit plan d'appui (1).
